# FASCICULE DE BREVET EUROPEEN

(11) **EP 1 736 686 B1**
(45) Date de publication et mention de la délivrance du brevet: **13.04.2011**
(21) Numéro de dépôt: 06300566.4
(22) Date de dépôt: 07.06.2006
(51) Int. Cl.: F16H 1/16, F16D 1/10

(54) **Dispositif d'accouplement entre l'arbre moteur d'un moteur électrique et une vis sans fin coaxiale à cet arbre**
Kupplungsvorrichtung zwischen der Welle eines elektrischen Motors und einer koaxial zur Welle angeordneten Schneckenwelle
Coupling device between the shaft of an electric motor and an endless screw coaxial to the said shaft

(30) Priorité: 22.06.2005 FR 0506326
(43) Date de publication de la demande: 27.12.2006
(73) Titulaire: Peugeot Citroën Automobiles SA, 78943 Vélizy-Villacoublay Cedex (FR)
(72) Inventeur: Wascheul, Michaël, 78260 Acheres (FR); Le Page, Marlène, 92250 La Garenne-Colombes (FR)

(56) Documents cités:
- EP-A- 0 947 729
- US-A- 4 185 513
- US-A- 5 010 993
- US-A1- 2004 018 907

## Description

La présente invention concerne un dispositif d'accouplement entre l'arbre moteur, notamment d'un moteur électrique, et une vis sans fin montée à rotation coaxialement à l'arbre moteur.

Le moteur électrique et la vis sans fin peuvent être utilisés dans une boîte de vitesses d'un véhicule automobile.

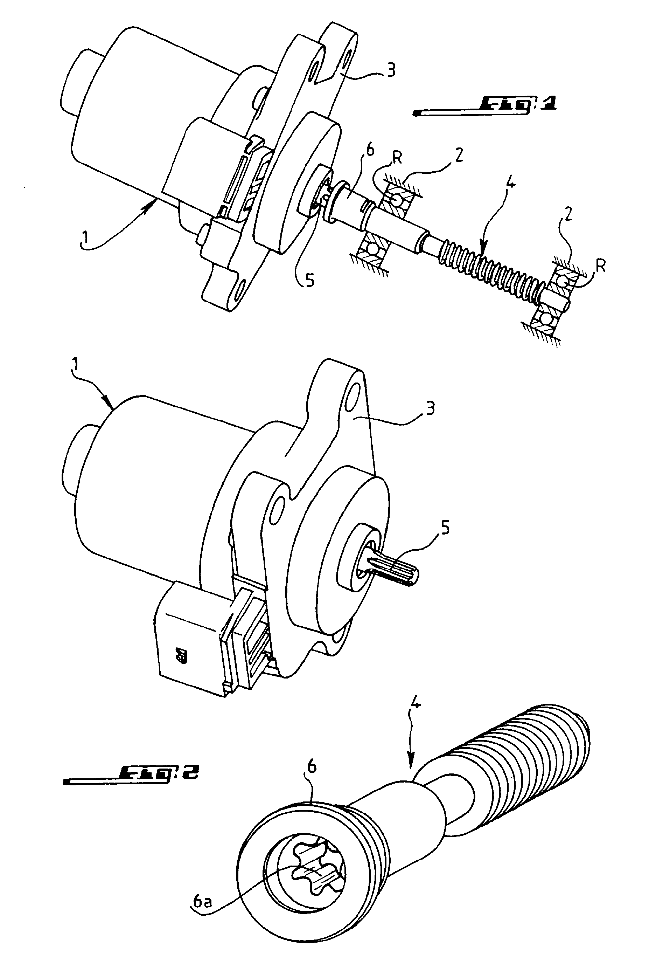

Les figures 1 et 2 représentent un dispositif connu d'accouplement entre un moteur électrique 1, solidaire d'un support 2 par une bride de fixation 3, et une vis sans fin 4 coaxiale à l'arbre d'entraînement 5 du moteur 1 et montée à rotation dans le support 2 par deux paliers R, longitudinalement espacés sur la vis 4, pouvant être constitués par des roulements à billes ou à rouleaux.

L'accouplement entre l'arbre moteur 5 et la vis sans fin 4 s'effectue par une douille d'extrémité 6 de la vis 4 à empreinte interne 6a du type Torx dans laquelle s'engage l'extrémité conjuguée de l'arbre moteur 5.

Si un tel dispositif permet un bon transfert du couple de l'arbre moteur 5 à la vis sans fin 4, il a pour inconvénient que le jeu fonctionnel à respecter pour cet accouplement rend très contraignante la réalisation de la profondeur de l'empreinte 6a, impliquant des coûts de réalisation relativement élevés et compliquant le procédé de réalisation de cet accouplement.

On connaît également, notamment du document US-A-5010993, un dispositif d'accouplement selon lequel l'extrémité de l'arbre moteur du moteur électrique est constituée par une panne plate s'engageant dans une fente de l'extrémité correspondante de la vis sans fin.

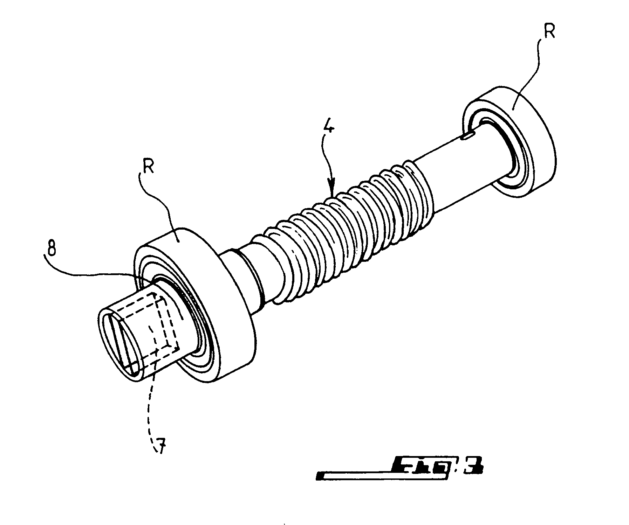

La figure 3 représente la vis sans fin 4 comprenant la fente d'extrémité 7 et ses deux roulements R espacés longitudinalement sur la vis 4.

Un tel dispositif d'accouplement est d'une réalisation extrêmement simple et peu coûteuse du fait que l'usinage de la panne plate d'extrémité de l'arbre moteur du moteur électrique et de la fente d'extrémité de la vis peut être effectué facilement et, en outre, il est moins contraignant en ce qui concerne le jeu fonctionnel d'accouplement par rapport à l'accouplement à empreinte Torx précédemment décrit.

Cependant, ce dispositif d'accouplement connu a pour inconvénient de nécessiter une bague 8 de cerclage de l'extrémité de la vis 4 comportant la fente 7 afin d'éviter l'écartement l'une de l'autre des deux parties fendues de cette extrémité lors de l'application du couple d'entraînement de la vis 4 par l'arbre moteur 5. En outre, la présence de la bague de cerclage 8 à l'extrémité de la vis 4 déporte le roulement adjacent R du support de la vis 4, augmentant par conséquent l'encombrement en longueur de cette vis.

La présente invention a pour but d'éliminer l'inconvénient ci-dessus des dispositifs d'accouplement connus en proposant un dispositif d'accouplement conforme à l'objet de la revendication 1.

La portée de la partie d'extrémité cylindrique pleine de la vis sans fin s'étend longitudinalement sur environ la moitié de la bague intérieure du roulement et la partie cylindrique de prolongement fait saillie de ce roulement.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant deux modes de réalisation de l'invention et dans lesquels :
- la figure 1 est une vue en perspective d'un ensemble à moteur électrique et vis sans fin accouplés par un dispositif à empreinte Torx de l'art antérieur et déjà décrite;
- la figure 2 est une vue en perspective éclatée représentant le dispositif d'accouplement à empreinte Torx de la figure 1 ;
- la figure 3 est une vue en perspective d'une vis sans fin à extrémité fendue suivant l'art antérieur et déjà décrite;
- la figure 4 est une vue en perspective représentant le dispositif de l'invention permettant d'accoupler un moteur électrique à une vis sans fin ;
- la figure 5 est une vue en perspective de trois-quarts du moteur électrique suivant la flèche V de la figure 4 ;
- la figure 6 est une vue en perspective de la vis sans fin du dispositif d'accouplement de la figure 4 ;
- la figure 7 est une vue en coupe longitudinale d'une variante de réalisation du dispositif de l'invention permettant l'accouplement entre le moteur électrique et la vis sans fin ; et
- la figure 8 est une vue agrandie de la partie cerclée en VIII de la figure 7.

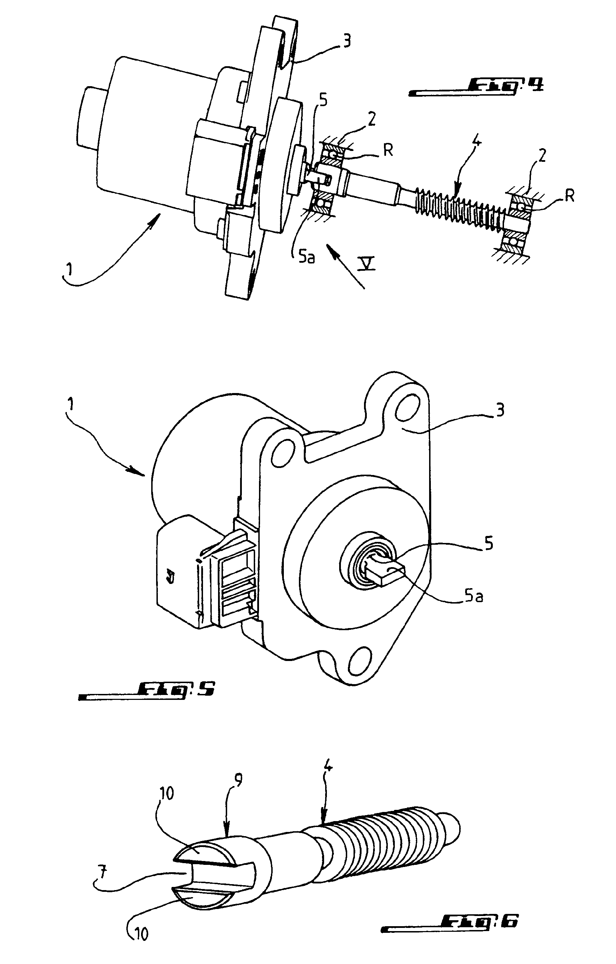

En se reportant aux figures 4 à 8, la référence 1 désigne un moteur électrique solidaire d'un support 2 par une bride 3 et dont l'arbre moteur 5 a son extrémité libre constituée par une panne plate 5a pouvant s'engager dans une fente 7 réalisée à l'extrémité d'une vis sans fin 4 montée à rotation dans le support 2 par deux roulements à billes ou à aiguilles 5 longitudinalement espacés sur la vis 4. La vis 4 s'étend coaxialement à l'arbre 5.

La fente 7 est réalisée en bout d'une partie cylindrique d'extrémité 9 de la vis 4 définie à son extrémité libre par deux segments cylindriques parallèles 10.

Selon l'invention, la fente d'extrémité 7 de la vis 4 se trouve en grande partie située dans le roulement R de support de la partie d'extrémité 9 dont les segments 10 font en partie saillie du roulement R vers l'arbre moteur 5, c'est-à-dire que les deux segments cylindriques 10 délimitant la fente 7 sont en partie logés dans la bague intérieure R1 du roulement R, le fond 7a de la fente, qui s'étend perpendiculairement à l'axe longitudinal de la vis 4, étant sensiblement situé dans le plan médian du roulement R perpendiculaire à cet axe. La partie 9 de la vis 4 est montée suivant un ajustement serré de la bague intérieure R1 du roulement R.

Ainsi, la bague de cerclage 8 qui était utilisée dans le dispositif connu de la figure 3 est supprimée et remplacée par la bague intérieure R1 du roulement R, ce qui rend plus compacte en direction longitudinale ce dispositif d'accouplement.

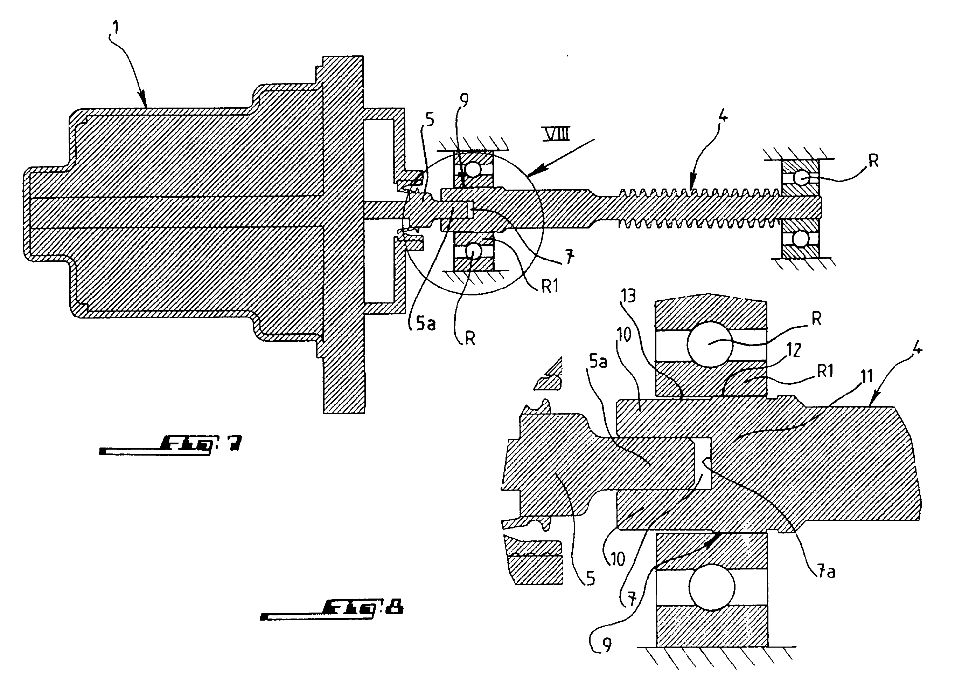

Selon l'invention comme représentée aux figures 7 et 8, la partie d'extrémité 9 de la vis 4 comprend une partie pleine 11 délimitée par une portée 12 sur laquelle est montée suivant un ajustement serré la bague intérieure R1 du roulement R, la partie pleine 11 étant prolongée par les deux secteurs cylindriques 10 à fente 7 ayant un diamètre externe inférieure au diamètre de la portée cylindrique 12 de manière à définir un espace annulaire interne 13 avec la bague intérieure R1.

De préférence, la portée cylindrique 12 s'étend longitudinalement sur environ la moitié de la bague intérieure R1 du roulement R jusqu'en aplomb de la paroi de fond 7a de la fente 7.

Cette variante a pour avantage que la partie de la bague intérieure R1 du roulement R, entourant avec jeu radial la partie correspondante des deux segments cylindriques 10, empêche les segments 10 de serrer la panne plate 5a de l'arbre moteur 5, permettant ainsi un accostage du moteur électrique avec la vis 4 suivant un jeu réduit et évitant également un matage de la panne 5a.

## Revendications

1. Dispositif d'accouplement entre l'arbre moteur (5), notamment d'un moteur électrique (1), et une vis sans fin (4) montée à rotation, coaxialement à l'arbre moteur (5) dans un support fixe (2), par deux paliers longitudinalement espacés (R)sur la vis (4), comprenant une panne plate (5a) solidaire de l'extrémité de l'arbre moteur (5) et s'engageant dans une fente (7) formée dans l'extrémité correspondante (9) de la vis sans fin (4), qui se trouve en grande partie logée dans le palier de support (R) de cette extrémité qui est un pallier à roulement dont la bague intérieure (R1) coiffe cette extrémité, **caractérisé en ce que** l'extrémité (9) de la vis sans fin (4) comporte une partie cylindrique pleine (11) délimitée par une portée (12) sur laquelle est montée suivant un ajustement serré la bague intérieure (R1) et une partie cylindrique de prolongement à deux secteurs cylindriques (10) comportant la fente (7) et d'un diamètre externe inférieur à celui de la portée (12) de manière à définir un espace annulaire interne (13) avec la bague intérieure (R1).

2. Dispositif selon la revendication 1, **caractérisé en ce que** la portée (12) de la partie d'extrémité cylindrique pleine (11) de la vis sans fin (4) s'étend longitudinalement sur environ la moitié de la bague intérieure (R1) du roulement (R) et la partie cylindrique de prolongement (10) fait saillie du roulement.

## Claims

1. A coupling device between the drive shaft (5), in particular of an electric motor (1), and an endless screw (4) which is rotatably mounted coaxially to the drive shaft (5), in a fixed support (2), by two longitudinally spaced bearings (R) on the screw (4), comprising a flat end piece (5a) integral with the end of the drive shaft (5) and engaging in a slot (7) formed in the corresponding end (9) of the endless screw (4), which is situated to a large extent housed in the support bearing (R) of this end which is a rolling bearing, the interior ring (R1) of which caps this end, **characterized in that** the end (9) of the endless screw (4) comprises a solid cylindrical part (11) delimited by a bearing surface (12) on which there is mounted according to an interference fit the interior ring (R1) and a cylindrical extension part having two cylindrical sectors (10) comprising the slot (7) and with an external diameter less than that of the bearing surface (12), so as to define an internal annular space (13) with the interior ring (R1) .

2. The device according to Claim 1, **characterized in that** the bearing surface (12) of the solid cylindrical end part (11) of the endless screw (4) extends longitudinally over approximately half of the interior ring (R1) of the rolling bearing (R) and the cylindrical extension part (10) projects from the rolling bearing.

## Patentansprüche

1. Kupplungsvorrichtung zwischen der Antriebswelle (5), insbesondere eines Elektromotors (1), und einer Schnecke (4), die drehend koaxial zur Antriebswelle (5) in einem stationären Träger (2) mit zwei längs beabstandeten Lagern (R) auf der Schnecke (4) montiert ist, die eine flache Finne (5a) aufweist, die fest mit dem Ende der Antriebswelle (5) verbunden ist und sich in einen Schlitz (7) fügt, der in dem entsprechenden Ende (9) der Schnecke (4) ausgebildet ist, die großteils in dem Stützlager (R) dieses Endes untergebracht ist, das ein Kugellager ist, dessen Innenring (R1) auf diesem Ende sitzt, **dadurch gekennzeichnet, dass** das Ende (9) der Schnecke (4) einen massiven zylindrischen Teil (11) aufweist, der von einer Auflage (12) abgegrenzt ist, auf der entlang einer knappen Passung der Innenring (R1) und ein zylindrischer Verlängerungsteil mit zwei zylindrischen Abschnitten (10), die den Schlitz (7) aufweisen und einen Außendurchmesser haben, der kleiner ist als der der Auflage (12), derart montiert sind, dass mit dem Innenring (R1) ein innerer Ringraum (13) gebildet wird.

2. Vorrichtung nach Anspruch 1, **dadurch gekennzeichnet, dass** sich die Auflage (12) des massiven zylindrischen Endteils (11) der Schnecke (4) längs auf etwa der Hälfte des Innenrings (R1) des Lagers (R) erstreckt und der zylindrische Verlängerungsteil (10) aus dem Lager vorsteht.
